# EUROPEAN PATENT APPLICATION

(11) **EP 4 779 636 A2**
(43) Date of publication of application: **22.07.2026**
(21) Application number: 26175455.0
(22) Date of filing: 23.04.2021
(51) Int. Cl.: G11B 27/031

(54) **SYSTEMS AND METHODS FOR REAL TIME CONTROL OF A REMOTE VIDEO PRODUCTION WITH MULTIPLE STREAMS**

(30) Priority: 01.05.2020 US 202063018717 P; 26.02.2021 US 202117249303
(62) Divisional of application: 21170112.3
(71) Applicant: TVU Networks Corporation, Cupertino, CA 95014 (US)
(72) Inventor: Shen, Paul, Woodside, 94062 (US)
(74) Representative: Hoeger, Stellrecht & Partner Patentanwälte mbB

(57) **Abstract**

The present invention relates to a method for real time video production using multiple streams, comprising: encoding video content from each of one or more video sources (10) into at least two separate streams, a first video stream from each of the one or more video sources (10) comprising a low quality version of the video content having a low latency and a second video stream from each of the one or more video sources (10) comprising a higher quality version of the video content having a higher latency; providing corresponding video frames of the first video stream and the second video stream with identical video timestamps; providing a first signal path (1) for communicating the first video stream from the one or more video sources (10) to a user interface (12) at the low latency; providing a second signal path (2) for communicating the second video stream from the one or more video sources (10) to a video production server (14) at the higher latency, the video production server (14) being adapted to receive the second video streams over the second signal path (2); the user interface (12) sending control signals comprising commands for selecting and manipulating the video content from the one or more video sources (10), the commands being based on one or more of the first video streams received on the first signal path (1); and carrying out the commands on video content from one or more of the second video streams received on the second signal path (2) to produce a video program wherein a user device (15) comprising the user interface (12) is adapted to receive the first video streams over the first signal path (1); and the commands are communicated from the user device (15) to a control unit (18) of the video production server (14).

## Description

The present disclosure is a divisional application and relates to the subject matter disclosed in European patent application No. 21 170 112.3 which is incorporated herein by reference in its entirety and for all purposes.

This application claims the benefit of U.S. Provisional Application No. 63/018,717 filed on May 1, 2020 and of U.S. Application No. 17/249,303 filed on February 26, 2021, each of which is incorporated herein and made a part hereof by reference for all purposes.

### BACKGROUND OF THE INVENTION

The present invention relates to the field of video production. More specifically, the present invention relates to a cloud-based video production system that enables real time or near real time manipulation of video from multiple sources.

In particular, the present invention relates to meeting the demand in the video production process requiring low latency video for interaction, preview and control, while the video quality for the signal delivered to the consumer needs to be very high. It should be appreciated that the same technology disclosed herein for use with cloud-based video production can also be used for normal video production.

To transmit a broadcast quality video signal, the latency is quite often longer than what real time interaction demands in certain situations, such as a news anchor or television host having a video conference with one or more remote guests, in real time. However, real time video conferencing systems have difficulty delivering broadcast quality video.

It would be advantageous to provide methods and apparatus that enable real time or near real time interaction with video content while still enabling broadcast quality video production. It would also be advantageous to provide such features as part of a cloud-based video production system to produce live video content.

The methods and apparatus of the present invention provide the foregoing and other advantages.

### SUMMARY OF THE INVENTION

The present invention relates to a cloud-based video production system that enables real time or near real time manipulation of video from multiple sources.

In accordance with an example embodiment of a method for real time video production using multiple streams, video content from each of one or more video sources is encoded into at least two separate streams, a first video stream from each of the one or more video sources comprising a low quality version of the video content having a low latency and a second video stream from each of the one or more video sources comprising a higher quality version of the video content having a higher latency. Corresponding video frames of the first video stream and the second video stream are provided with identical video timestamps. A first signal path is provided for communicating the first video stream from the one or more video sources to a user interface at the low latency. A second signal path is provided for communicating the second video stream from the one or more video sources to the user interface at the higher latency. Control signals comprising commands are sent (e.g., from the user interface to a control unit) for selecting and manipulating the video content from the one or more video sources. The commands may be based on one or more of the first video streams received on the first signal path. The commands are carried out on video content from one or more of the second video streams received on the second signal path to produce a video program.

The second video streams may be buffered at one or more buffers to account for latencies in carrying out the commands. The buffering may enable rewind and instant replay features. A user device comprising the user interface may be adapted to receive the first video streams over the first signal path. A cloud production server may be adapted to receive the second video streams over the second signal path. The commands may be communicated from the user device to a control unit of the cloud production server.

The user device may comprise a display for displaying the first video streams from the one or more video sources.

The control signal may further comprise the video timestamp for each of the video frames subject to the command. The commands are executed at the time when the video timestamp at an output of the buffer matches the video timestamp received in the control signal.

The second video streams may comprise production quality video. Further, the video content may comprise live video content.

The commands may comprise commands for: switching between the video content provided by the one or more video sources; selecting the video content or portions of the video content provided by one or more of the one or more video sources; combining the video content or portions of the video content from the one or more video sources; manipulating the video content or the portions of the video content; adjusting video brightness; providing a graphics overlay; turning on and off a video graphics overlay; adjusting an audio level; and adding special effects to the video content or portions of the video content.

The present invention also includes apparatus and systems for carrying out the method. An example embodiment of a system for real time video production using multiple streams may comprise one or more video sources each providing respective video content, each of the one or more video sources encoding the respective video content into at least two separate streams, a first video stream from each of the one or more video sources comprising a low quality version of the video content having a low latency and a second video stream from each of the one or more video sources comprising a higher quality version of the video content having a higher latency. The system may also comprise a first signal path for communicating the first video stream from the one or more video sources to a user interface at the low latency and a second signal path for communicating the second video stream from the one or more video sources to the user interface at the higher latency. A user interface may be provided for sending control signals comprising commands for selecting and manipulating the video content from the one or more video sources, the commands being based on one or more of the first video streams received on the first signal path. The system may also comprise a video production server for carrying out the commands on one or more of the second video streams to produce a video program. Corresponding video frames of the first video stream and the second video stream may be provided with identical video timestamps.

The systems and apparatus of the present invention may also include various features of the method embodiments discussed above.

### BRIEF DESCRIPTION OF THE DRAWINGS

The present invention will hereinafter be described in conjunction with the appended drawing figures, wherein like reference numerals denote like elements, and:
Figure 1 shows an example embodiment of flow paths in a video production system in accordance with the present invention; and
Figure 2 shows an example embodiment of a cloud-based video production system in accordance with the present invention.

### DETAILED DESCRIPTON

The ensuing detailed description provides exemplary embodiments only, and is not intended to limit the scope, applicability, or configuration of the invention. Rather, the ensuing detailed description of the exemplary embodiments will provide those skilled in the art with an enabling description for implementing an embodiment of the invention. It should be understood that various changes may be made in the function and arrangement of elements without departing from the spirit and scope of the invention as set forth in the appended claims.

The present invention relates to a cloud-based video production system that delivers real time or near real time video with broadcast quality. Video from the same source is encoded into at least two separate streams, one with low latency and another with higher latency and higher quality. Corresponding frames of each stream have identical timestamps. Encoding the same video content into two streams with identical timestamps but different latencies and quality enables advantageous methods of video production and control, as will be explained in detail below in connection with exemplary embodiments.

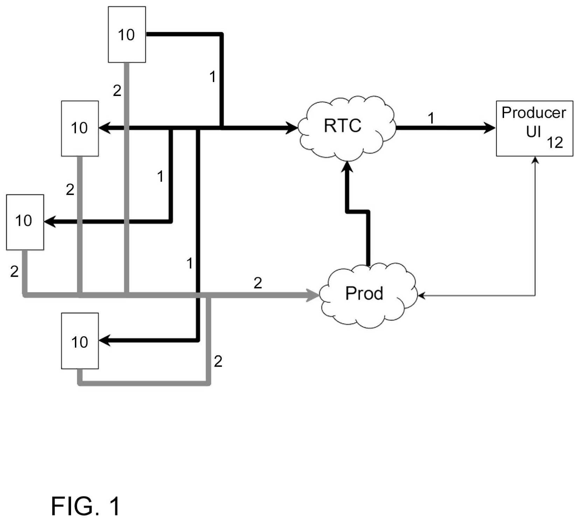

Figure 1 shows an example embodiment of flow paths in a video production system in accordance with the present invention. Multiple video sources 10 will each encode and output two versions of the same video content, a high-quality version and a lower quality version. The two versions of the video content will be provided in separate video streams transmitted along two different signal paths 1 and 2.

The video signals may comprise any combination of one or more of video, audio, and data. The video sources 10 may comprise one or more of a video camera, a camcorder, a television camera, a movie camera, a portable electronic device, an IP or web camera, a tablet computer, a laptop or computer monitor with built-in web camera, a smart phone, or the like.

The first signal path 1 is a real time control (RTC) path having low latency. The first signal path 1 is used to communicate the lower quality video content from video sources 10 to a producer user interface (UI) 12. The second signal path 2 provides the same video content at a higher video quality than that provided over the first signal path 1, but with longer latency. The video provided over the second signal path 2 may be, for example, production quality video.

The video streams sent along the first signal path 1 may be seen as proxy signals. All interactions between the video sources 10 and the producer UI 12 take place over the first signal path 1. For example, commands initiated from the producer UI 12 over the first signal path 1 may comprise commands for switching between the video sources 10, selecting the video content (or portions of the video content) from one or more of the video sources 10, combining the video content (or portions of the video content) from one or more of the video sources 10, manipulating the video content or portions of the video content, adjusting video brightness, providing a graphics overlay, turning on and off a graphics overlay, adjusting an audio level, adding special effects (either via embedding or overlay) to the video content or portions of the video content, and the like.

The video streams sent along the second signal path 2 are used to create high quality video output based upon the commands from the producer UI 12.

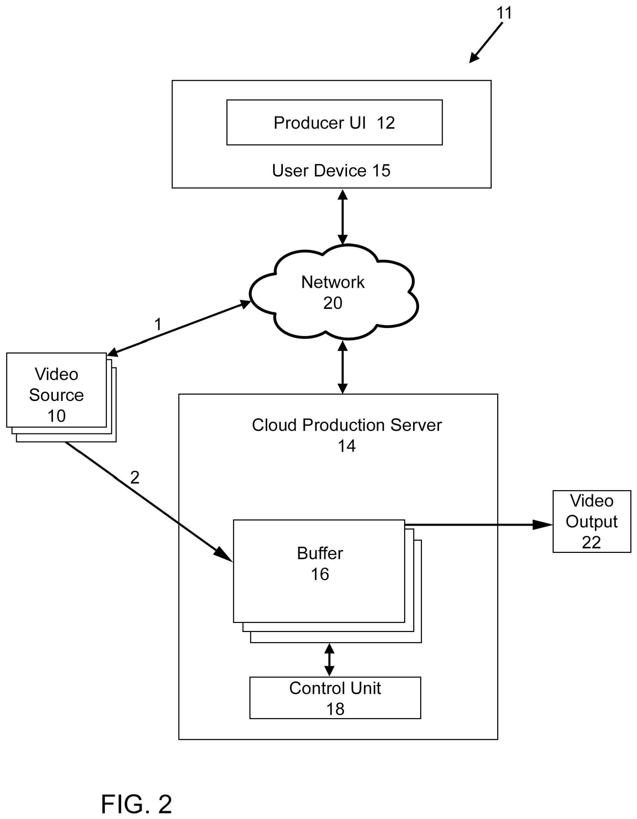

Figure 2 shows an example embodiment of a cloud-based video production system 11 in accordance with the present invention. The video streams sent from video sources 10 along both video signal paths 1 and 2 are routed through a cloud production server 14 and/or network 20, as are instructions from the producer UI 12. The cloud production server 14 may comprise one or more buffers 16.

A user may be operating the system remotely through a network 20 via the producer UI 12. The producer UI 12 receives the video streams over the first signal path. The producer UI 12 may be an application or a web browser running on an Internet enabled user device 15 (e.g., a computer, a laptop, a portable computer, a tablet computer, a smart phone, a smart watch, or any other type of personal computing device or other internet or network enabled device). The producer UI 12 may include a display for displaying the video content from the one or more video sources 10 (e.g., via the network 20) received via the first signal path 1. The producer UI 12 enables a user to select and control which content to use in the video program via control signals containing commands sent to the cloud production server 14. Selection of the video content, and execution of commands from the producer UI 12, is carried out via a control unit 18 located at or in communication with the cloud production server 14.

In order to apply the commands to the program output of the buffer 16 at exactly the same time location as instructed by the producer UI 12, both video streams sent along signal paths 1 and 2 use the same corresponding timestamps for the same time moment of the corresponding video stream, which may include video, audio and/or data.

The one or more buffers 16 are provided to account for anticipated delay between the cloud production server 14 and producer UI 12. The high quality video streams sent from video sources 10 to the cloud production server 14 along the second signal path 2 are buffered in the one or more buffers 16. When a user initiates an action on the producer UI 12 based on the low latency video streams received along the first signal path 1, the producer UI 12 creates a corresponding command and also records the timestamps of the video showing on the producer UI 12 at that moment. The producer UI 12 sends a control signal with the command(s) together with the timestamp(s) of the corresponding video frames subject to the commands to the production server 14 for execution on the program content.

Once the control unit 18 receives a command together with the timestamp from the producer UI 12, it will execute the command on the video streams sent along the second signal path 2 at the buffer 16, according to the timestamps in the video signal. The cloud production server 14 then produces a high-quality video output 22 based on the video streams from the second signal path 2.

For example, during a video conference among multiple participants each participant may participate using a separate video source 10 (e.g., a web cam). Each video source 10 for each participant may simultaneously send video streams over the first and second signal paths 1 and 2, with a lower quality streams being sent with low latency over the first signal path 1 and a high quality video stream with higher latency being sent over the second signal path. The video streams are received by the cloud production server 14 and the producer UI 12, with the video streams sent over the first signal path 1 being made available to a user on the producer UI 12 and the video streams sent over the second signal path 2 being buffered at the one or more buffers 16. During the video conference, the video output 22 may show a first participant in the video conference.

If the user decides to switch from viewing or speaking to the first participant in the video conference, an instruction may be sent to switch to a different video source 10 for a second participant. The command and a time stamp of the video stream at the time the command was sent will be provided from the producer UI 12 to the control unit 18. The control unit 18 will execute the command at a time when the video timestamp at the buffer 16 matches the timestamp received from the producer UI 12. After execution of the command, the buffer 16 will output video from a video source 10 of the second participant that is received along the second signal path 2, resulting in a high-quality video output 22.

Since the video content received from the video sources 10 along the second signal path 2 is delayed by the one or more buffers 16, any network delay in carrying out the command from the producer UI 12 is accounted for. However, such delay is reduced since the commands are based on the low latency video signals received along the first signal path 1. Using the time stamps from the video content received over the first signal path 1 and corresponding timestamps from the commands, the desired actions specified in the commands can be synchronized to affect the desired video content output from the second signal path 2 at the appropriate time.

The output video 22 may be output for live broadcast or distribution to other media platforms, such as one or more social media outlets, a digital media distribution platform, or the like. The completed video program 22 may also be downloaded to the user device 15 and distributed to media outlets or further modified or edited prior to such distribution.

The system is particularly advantageous for the production of live video conferences among multiple participants. However, the system may also be used to create various other types of video programs, including news programs, sports, weather, live events, entertainment, and more. The video sources 10 may provide live video content for the production of live video programs. The video content can also be stored for later use. For example, the system may be used to produce a live sporting event, where each video source comprises a different camera or camera angle of the sporting event. Instant replays can be generated by sending commands to the control unit 18 requesting the addition of content from one or more of the video sources which includes the play to be shown in the instant replay. The one or more buffers 16 may be large enough to record all input feeds from the corresponding video source 10 for the entire event, facilitating instant replay and rewind features. The buffers 16 may also be used for storing the raw video content for future production needs, such as reproducing the video program. The buffers 16 may be implemented with short term memory (RAM), local storage (hard disk on the cloud production server 14 or otherwise associated with the video source 10), and long term storage (cloud storage, such as AWS S3 or the like). Access to long term storage of the buffers 16 may be seamless, similar to access to short term or local storage.

It should now be appreciated that the present invention provides advantageous methods and apparatus for providing a high-quality video output from a cloud-based video production system.

Although the invention has been described in connection with various illustrated embodiments, numerous modifications and adaptations may be made thereto without departing from the spirit and scope of the invention as set forth in the claims.

In accordance with a first embodiment, it is provided a method for real time video production using multiple streams, comprising:
encoding video content from each of one or more video sources into at least two separate streams, a first video stream from each of the one or more video sources comprising a low quality version of the video content having a low latency and a second video stream from each of the one or more video sources comprising a higher quality version of the video content having a higher latency;
providing corresponding video frames of the first video stream and the second video stream with identical video timestamps;
providing a first signal path for communicating the first video stream from the one or more video sources to a user interface at the low latency;
providing a second signal path for communicating the second video stream from the one or more video sources to the user interface at the higher latency;
sending control signals comprising commands for selecting and manipulating the video content from the one or more video sources, the commands being based on one or more of the first video streams received on the first signal path; and
carrying out the commands on video content from one or more of the second video streams received on the second signal path to produce a video program.

In accordance with a second embodiment, which is related to the first embodiment, it is provided to further comprise buffering the second video streams at one or more buffers to account for latencies in carrying out the commands, in particular wherein the buffering enables rewind and instant replay features.

In accordance with a third embodiment, which is related to the second embodiment, it is provided a method, wherein:
a user device comprising the user interface is adapted to receive the first video streams over the first signal path;
a cloud production server is adapted to receive the second video streams over the second signal path; and
the commands are communicated from the user device to a control unit of the cloud production server.

In accordance with a fourth embodiment, which is related to the third embodiment, it is provided a method, wherein the user device comprises a display for displaying the first video streams from the one or more video sources.

In accordance with a fifth embodiment, which is related to the third and fourth embodiment, it is provided a method, wherein:
the control signal further comprises the video timestamp for each of the video frames subject to the command; and
the commands are executed at the time when the video timestamp at an output of the buffer matches the video timestamp received in the control signal.

In accordance with a sixth embodiment, which is related to any of embodiments 1-5, it is provided a method, wherein the second video streams comprise production quality video.

In accordance with a seventh embodiment, which is related to any of embodiments 1-6, it is provided a method, wherein the video content comprises live video content.

In accordance with an eighth embodiment, which is related to any of embodiments 1-7, it is provided a method, wherein the commands comprise commands for: switching between the video content provided by the one or more video sources; selecting the video content or portions of the video content provided by one or more of the one or more video sources; combining the video content or portions of the video content from the one or more video sources; manipulating the video content or the portions of the video content; adjusting video brightness; providing a graphics overlay; turning on and off a video graphics overlay; adjusting an audio level; and adding special effects to the video content or portions of the video content.

In accordance with a ninth embodiment, it is provided a system for real time video production using multiple streams, comprising:
one or more video sources each providing respective video content, each of the one or more video sources encoding the respective video content into at least two separate streams, a first video stream from each of the one or more video sources comprising a low quality version of the video content having a low latency and a second video stream from each of the one or more video sources comprising a higher quality version of the video content having a higher latency;
a first signal path for communicating the first video stream from the one or more video sources to a user interface at the low latency;
a second signal path for communicating the second video stream from the one or more video sources to the user interface at the higher latency;
a user interface for sending control signals comprising commands for selecting and manipulating the video content from the one or more video sources, the commands being based on one or more of the first video streams received on the first signal path; and
a video production server for carrying out the commands on video content from one or more of the second video streams received on the second signal path to produce a video program;
wherein corresponding video frames of the first video stream and the second video stream are provided with identical video timestamps.

In accordance with a tenth embodiment, which is related to the ninth embodiment, it is provided a system, further comprising one or more buffers for buffering the second video streams to account for latencies in carrying out the commands, in particular wherein the buffering enables rewind and instant replay features.

In accordance with an eleventh embodiment, which is related to the tenth embodiment, it is provided a system, wherein:
a user device comprises the user interface which is adapted to receive the first video streams over the first signal path;
the cloud production server is adapted to receive the second video streams over the second signal path; and
the commands are communicated from the user device to a control unit of the cloud production server.

In accordance with a twelfth embodiment, which is related to the eleventh embodiment, it is provided a system, wherein the user device comprises a display for displaying the first video streams from the one or more video sources.

In accordance with a thirteenth embodiment, which is related to the eleventh and twelfth embodiment, it is provided a system, wherein:
the control signal further comprises the video timestamp for each of the video frames subject to the command; and
the commands are executed at the time when the video timestamp at an output of the buffer matches the video timestamp received in the control signal.

In accordance with a fourteenth embodiment, which is related to any of embodiments 9-13, it is provided a system with at least one of the following:
- the second video streams comprise production quality video;
- the video content comprises live video content.

In accordance with a fifteenth embodiment, which is related to any of embodiments 9-14, it is provided a system, wherein the commands comprise commands for: switching between the video content provided by the one or more video sources; selecting the video content or portions of the video content provided by one or more of the one or more video sources; combining the video content or portions of the video content from the one or more video sources; manipulating the video content or the portions of the video content; adjusting video brightness; providing a graphics overlay; turning on and off a video graphics overlay; adjusting an audio level; and adding special effects to the video content or portions of the video content.

## Claims

1. A method for real time video production using multiple streams (1, 2), comprising:
encoding video content from each of one or more video sources (10) into at least two separate streams, a first video stream from each of the one or more video sources (10) comprising a low quality version of the video content having a low latency and a second video stream from each of the one or more video sources (10) comprising a higher quality version of the video content having a higher latency;
providing corresponding video frames of the first video stream and the second video stream with identical video timestamps;
providing a first signal path (1) for communicating the first video stream from the one or more video sources (10) to a user interface (12) at the low latency;
providing a second signal path (2) for communicating the second video stream from the one or more video sources (10) to a video production server (14) at the higher latency, the video production server (14) being adapted to receive the second video streams over the second signal path (2);
the user interface (12) sending control signals comprising commands for selecting and manipulating the video content from the one or more video sources (10), the commands being based on one or more of the first video streams received on the first signal path (1); and
carrying out the commands on video content from one or more of the second video streams received on the second signal path (2) to produce a video program
wherein
a user device (15) comprising the user interface (12) is adapted to receive the first video streams over the first signal path (1); and
the commands are communicated from the user device (15) to a control unit (18) of the video production server (14).

2. A method in accordance with claim 1, further comprising buffering the second video streams at one or more buffers (16) to account for latencies in carrying out the commands, in particular wherein the buffering enables rewind and instant replay features.

3. A method in accordance with claim 1 or 2, wherein the user device (15) comprises a display for displaying the first video streams from the one or more video sources (10).

4. A method in accordance with any one of claims 1 to 3, wherein:
the control signal further comprises the video timestamp for each of the video frames subject to the command; and
the commands are executed at the time when the video timestamp at an output of the buffer (16) matches the video timestamp received in the control signal.

5. A method in accordance with any of claims 1-4, wherein the second video streams comprise production quality video.

6. A method in accordance with any of claims 1-5, wherein the video content comprises live video content.

7. A method in accordance with any of claims 1-6, wherein the commands comprise commands for: switching between the video content provided by the one or more video sources (10); selecting the video content or portions of the video content provided by one or more of the one or more video sources (10); combining the video content or portions of the video content from the one or more video sources (10); manipulating the video content or the portions of the video content; adjusting video brightness; providing a graphics overlay; turning on and off a video graphics overlay; adjusting an audio level; and adding special effects to the video content or portions of the video content.

8. A system for real time video production using multiple streams, comprising:
one or more video sources (10) each providing respective video content, each of the one or more video sources encoding the respective video content into at least two separate streams, a first video stream from each of the one or more video sources comprising a low quality version of the video content having a low latency and a second video stream from each of the one or more video sources comprising a higher quality version of the video content having a higher latency;
a first signal path (1) for communicating the first video stream from the one or more video sources (10) to a user interface (12) at the low latency;
a second signal path (2) for communicating the second video stream from the one or more video sources (10) to a video production server (14) at the higher latency;
a user interface (12) for sending control signals comprising commands for selecting and manipulating the video content from the one or more video sources (10), the commands being based on one or more of the first video streams received on the first signal path (1); and
wherein the video production server (14) is adapted for carrying out the commands on video content from one or more of the second video streams received on the second signal path (2) to produce a video program;
wherein corresponding video frames of the first video stream and the second video stream are provided with identical video timestamps
and wherein
a user device (15) comprises the user interface (12) which is adapted to receive the first video streams over the first signal path (1);
the video production server (14) is adapted to receive the second video streams over the second signal path (2); and
the commands are communicated from the user device (15) to a control unit of the video production server (14).

9. A system in accordance with claim 8, further comprising one or more buffers (16) for buffering the second video streams to account for latencies in carrying out the commands, in particular wherein the buffering enables rewind and instant replay features.

10. A system in accordance with claim 8 or 9, wherein the user device comprises a display for displaying the first video streams from the one or more video sources (10).

11. A system in accordance with any one of claims 8 to 10, wherein:
the control signal further comprises the video timestamp for each of the video frames subject to the command; and
the commands are executed at the time when the video timestamp at an output of the buffer matches the video timestamp received in the control signal.

12. A system in accordance with any of claims 8-11, with at least one of the following:
- the second video streams comprise production quality video;
- the video content comprises live video content.

13. A system in accordance with any of claims 8-12, wherein the commands comprise commands for: switching between the video content provided by the one or more video sources (10); selecting the video content or portions of the video content provided by one or more of the one or more video sources (10); combining the video content or portions of the video content from the one or more video sources (10); manipulating the video content or the portions of the video content; adjusting video brightness; providing a graphics overlay; turning on and off a video graphics overlay; adjusting an audio level; and adding special effects to the video content or portions of the video content.

14. A method in accordance with claim 4, wherein the video timestamp received in the control signal comprises the video timestamp of the video frame displayed at the time the control signal is generated.

15. A system in accordance with claim 11, wherein the video timestamp received in the control signal comprises the video timestamp of the video frame displayed at the time the control signal is generated.
